# EUROPEAN PATENT SPECIFICATION

(11) **EP 3 445 157 B1**
(45) Date of publication and mention of the grant of the patent: **11.08.2021**
(21) Application number: 17719740.7
(22) Date of filing: 18.04.2017
(51) Int. Cl.: A01G 9/04, A01G 9/08

(54) **EXTENDABLE PLANT TRAY ASSEMBLY**
AUSZIEHBARER TRÄGER FÜR PFLANZTÖPFE
PORTEUR EXTENSIBLE POUR POTS DE CULTURE

(30) Priority: 18.04.2016 NL 2016632
(43) Date of publication of application: 27.02.2019
(73) Proprietor: Crea-Tech International B.V., 1432 DG Aalsmeer (NL)
(72) Inventor: VAN DER LAAN, Paulus Maria, 1432 DG Aalsmeer (NL)
(74) Representative: V.O.
(86) International application number: PCT/NL2017/050245
(87) International publication number: WO 2017/183969

(56) References cited:
- EP-A1- 0 477 064
- FR-A1- 2 696 162

## Description

The invention relates to an extendable plant tray assembly for growing plants.

Plants are being grown from seeds or cuttings in containers or pots which are placed in rows on a plant tray, for example on a growing table. These pots are initially closely spaced in order to maximize the number of pots on a given surface. When the plants grow bigger, they need to be spaced-apart to provide the adequate space, light and air to the plants. In a common method for spacing apart growing plants on a tray, one plant out of two adjacent plants is picked out in every row, and placed on a second tray. This can be done manually or mechanically. In both cases, it is a time-consuming job, during which the growing plants run the risk of being damaged due to the handling, lifting and/or moving of the plants.

US 5,664,370 discloses a plant growing tray for the initial growing of roots and starter plants comprising a plurality of rows of tray compartments and a foldable portion formed between two adjacent rows connecting the plurality of rows to form a single piece of tray. Even if such a plant growing tray may facilitate the spacing apart of growing plants in one direction, the plants remain too closely spaced in a second direction transverse to the folding out of the foldable connecting portions. Therefore, one plant out of two adjacent plants still has to be picked out in this second direction, manually or mechanically.

In GB 1,160,390 an apparatus for shifting potted plants in gardening nurseries is disclosed. The apparatus comprises a plurality of plant holders, which are movably connected to one another by extension arms, wherein the spacing between said holders is variable in two directions. Apart from its rather complicated structure, the disclosed apparatus suffers from the disadvantage that the surface needed for the extended apparatus more than doubles or even nearly triples compared to the original surface of the non-extended apparatus, which is unnecessary for an adequate growing space of the plants. The use of this apparatus therefore results in an non-optimized use of the surface for growing plants.

EP 0 477 064 discloses a plant tray assembly having grid elements with a central rib and plant holders at both sides arranged in a staggered manner. Plant pots are hung in the plant holders. By increasing the distance between the grid elements, the distance between the plant pots hanging in the plant holders increases.

It is an aim of the present invention to solve or alleviate one or more of the above-mentioned problems. Particularly, the invention aims at providing a more efficient extendable plant tray assembly, which allows an optimization of plant spacing and surface use. It is also an aim of the invention to provide a plant tray assembly which reduces the time needed for the spacing apart of plants. It is a further object of the invention to provide an assembly which is relatively easy to construct.

To this aim, there is provided an extendable plant tray assembly characterized by the features of claim 1. In particular, the invention provides an extendable plant tray assembly comprising a plurality of plant holders in a grid structure, wherein, in a first direction, said plant holders are movably connected through an extension system arranged to move said plant tray assembly between a retracted position and an extended position, the assembly including at least one grid structure element comprising a central rib in a second direction transverse to said first direction, wherein a plurality of plant holders is mounted to said rib in a staggered manner, alternating a plant holder with a plant holder receiving space. This inventive grid structure element with plant holders mounted in a staggered manner leads to an extendable plant tray assembly, in which extension of the assembly in only one direction results in a spacing apart of plant holders in two transverse directions, thus reducing substantially the time needed for this spacing apart. An additional advantage is that a width of said assembly measured in said second direction, transverse to said first direction of extension, does not change between said retracted and said extended position, which optimizes plant spacing and surface use. At the same time, a more complicated two dimensional extension system is avoided, leading to an assembly which is relatively easy to construct.

In a preferred embodiment of the invention, a distance between diagonally adjacent plant holders can remain unchanged between said retracted position and said extended position of said assembly. Experience in plant growing has shown that the distance between diagonally adjacent plants need not necessarily be increased when plants are growing bigger. Therefore, by keeping said distance constant between a retracted and an extended position of the assembly, and by increasing only a distance between laterally adjacent plant holders, the total surface covered by the assembly can maximally double, resulting in an optimization of the plant spacing and the surface use for growing plants.

The plant tray assembly includes at least one grid structure end element, arranged to be located at an end position of said assembly in said first direction, comprising a rib in said second direction, wherein plant holders are only mounted to a single side of said rib, alternating a plant holder with a plant holder receiving space. In this way, protruding plant holders at a border of the plant tray assembly can be avoided, which optimizes the surface use for plant growing.

It is still more preferred that the plant tray assembly includes two grid structure end elements, in between which at least one grid structure element is located. Such an assembly can have a substantially rectangular shape in its retracted position with a maximal number of plant holders filling the substantially rectangular surface area.

Said extension system may advantageously comprise a slidable extension system, leading to a relatively solid and compact extension system, and to a relatively easy to operate plant tray assembly. Alternatively, the extension system may comprise a foldable extension system, comprising for example a single or a double structure which can be folded in zigzag like a yardstick. Another extremely simple alternative extension system may comprise pieces of cord connecting said plant holders. Another example may be an extension system comprising a ratchet which may facilitate extension to the predetermined extended position.

More advantageously, said slidable extension system can comprise at least one telescopically extendable rod connecting at least two grid structure elements or connecting a grid structure end element to at least one grid structure element. When providing a telescopically extendable rod connection, the plant holder tray can be handled as a whole without losing the interconnection between the grid structure elements. The telescopically extendable connection may also provide for strength in the vertical direction of the plant holder tray, such that the plant holder tray may be lifted and/or handled both in retracted and in extended condition. The telescopically extendible connection typically may comprise an end piece, an intermediate piece and a telescopic rail, which may provide for strength and/or stiffness also in vertical direction. Alternatively, the slidable extension system may comprise a pin sliding in a slit, or other (sliding) extension systems known to the person skilled in the art. A pin and slit connection may be integrated to the plant holder elements, which may result in less components and/or may provide for a more simpler design.

A size of said plant holder receiving space can preferably correspond to a size of an adjacent plant holder, resulting in an optimal use of space.

Said plant holder may advantageously include a bottom surface, in which case a plant pot can be supported by said bottom surface, providing a plant tray assembly which can be used independently of any other support surface. Alternatively, said plant holder may not include a bottom surface, and the plant tray assembly may be used on a supporting surface, for example on a table, on a transport cart, or on the ground, or without any supporting surface with plants pot hanging in the plant holders.

It may also be preferred that said plant holder is a plant pot. In this way, plants may be planted directly into a plant pot of said plant tray assembly without the need for repotting or for an extra pot.

In an advantageous embodiment of the invention, said grid structure element and/or said grid structure end element are modular elements, to which a desired number of plant holders is mountable. In this way, a size of such a plant tray assembly can easily be adapted to, and optimized for, the available surface for growing plants.

An aspect of the invention provides a grid structure element for a plant tray assembly, characterized by the features of claim 10. The grid structure element can provide one ore more of the above-mentioned advantages.

Another aspect of the invention provides a grid structure end element for a plant tray assembly, characterized by the features of claim 11. The grid structure end element can provide one ore more of the above-mentioned advantages.

Further advantageous embodiments are represented in the subclaims.

The present invention will be further elucidated with reference to figures of exemplary embodiments. Corresponding elements are designated with corresponding reference signs.
Figure 1 shows a perspective view on an exemplary embodiment of the invention in a retracted position;
Figure 2 shows a perspective view on the embodiment of Figure 1 in an extended position;
Figures 3a, 3b and 3c show schematic representations of alternative grid structure elements of an extendable plant tray assembly according to the invention; and
Figures 4a, 4b show schematic representations of an exemplary embodiment of an extendable plant tray assembly according to the invention in a retracted position (Fig. 4a) and in an extended position (Fig. 4b).
Figures 4c shows an embodiment of the grid structure element with an extension system.

It is noted that the figures are only schematic representations of embodiments of the invention that are given by way of non-limiting example. In the figures, the same or corresponding parts are designated with the same reference numerals.

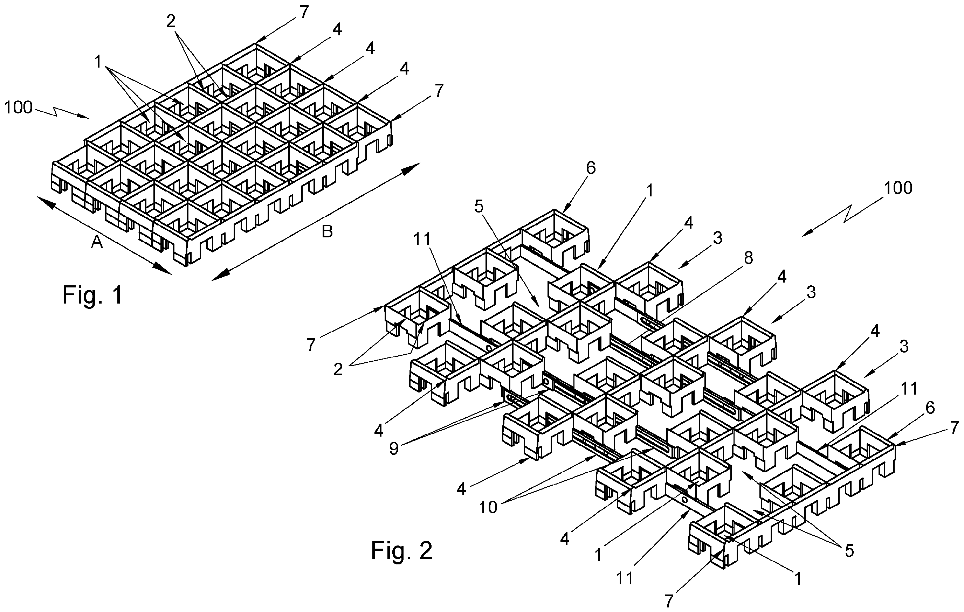

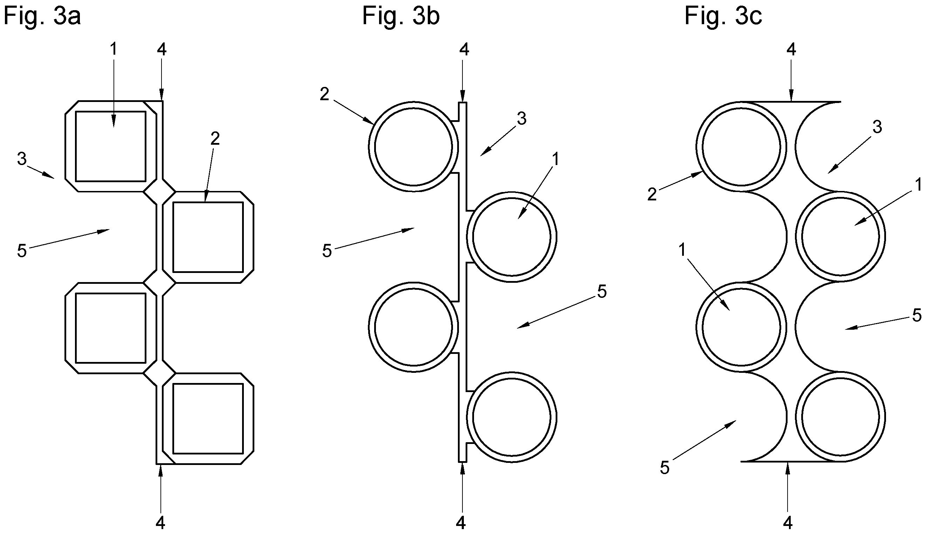

Figure 1 shows a perspective view on an exemplary and preferred embodiment of the invention in a retracted position. The extendable plant tray 100 of Figure 1 comprises a plurality of plant holders 1 in a grid structure, more specifically in this example 24 plant holders in a grid structure of four plant holders by six plant holders. In this embodiment, the plant holders 1 have a square shape, but they can also have a different shape, for example a circular (see for example Figures 3b and 3c), rectangular or octagonal (see for example Figure 3a) shape, or any other possible shape. The plant holders 1 are arranged to receive and hold plants, particularly plants in a plant pot. The plant holders 1 may for example be configured such that a plant pot is clipped onto a side wall 2 of a plant holder 1, or they may be configured such that a plant pot is squeezed between side walls 2 of a plant holder 1. In another embodiment, said plant holder 1 may include a bottom surface. In that case, a plant pot may be put onto, and be supported by the bottom surface only. Side walls 2 and/or a bottom surface of a plant holder 1 may comprise openings, for example to improve ventilation of the plant and/or to facilitate draining of water for plants. In still another embodiment, said plant holder may constitute a plant pot in itself. The plant holders 1 can for example be made of plastic, in particular of e.g. polypropylene or similar plastic material, or of any other suitable material. A characterizing length, i.e. a diameter of a circle or a side of a square, of such a plant holder 1 may for example be in a range of 3 - 20 cm, more preferably of 8 - 10 cm, and may be chosen/adapted in function of the plant to be grown. A thickness of a side wall 2 of a plant holder 1 may for example be in the range of 0.1 - 2 cm, for example approximately 0.5 cm. In a preferred embodiment, the size of the entire plant tray assembly 100 may also be chosen or adapted in function of the surface on which it will be used, for example corresponding to the size of a transport cart on which plants will later on be transported, for example in a lorry, in order for a transport cart to carry for example two plant tray assemblies in an extended position. Such a preferred size of an entire plant tray assembly 100 may for example be 50 cm measured along said first direction A, in an embodiment about 52 cm, by 35 cm measured along said second direction B, in an embodiment about 32 cm, in a retracted position and 50 cm by 70 cm in an extended position, in said embodiment about 64 cm, for a six by four plant holders plant tray assembly as in the embodiment of Figures 1 and 2. Any other size is of course possible as well.

In a first direction, indicated by a double arrow A, said plant holders 1 are movably connected through an extension system 8 arranged to move said assembly between a retracted position, shown in Figure 1, and an extended position, as shown in Figure 2. The extension system in itself will be described in more detail further on.

Figure 2 shows a perspective view on the embodiment of Figure 1 in an extended position. The plant tray assembly according to the invention includes at least one grid structure element 3 comprising a central rib 4 in a second direction B transverse to said first direction A. In an inventive way, a plurality of plant holders 1 is mounted to said rib 4 in a staggered manner, alternating a plant holder 1 with a plant holder receiving space 5. Figures 3a, 3b and 3c also show schematic representations of such grid structure elements 3 for alternative embodiments of the invention, also alternating a plant holder 1 with a plant holder receiving space 5. In the example of Figure 2, a size of said plant holder receiving space 5 corresponds to a size of an adjacent plant holder 1. As all plant holders 1 in this example have the same shape and size, also all plant holder receiving spaces 5 have the same shape and size, which need not necessarily be the case, as can for example be seen in Figure 3b, where a plant holder receiving space 5 has a different shape and size than a plant holder 1. As in the exemplary embodiment of Figures 1 and 2, the plant tray assembly also includes at least one grid structure end element 6, arranged to be located at an end position of said assembly in said first direction A, comprising a rib 7 in said second direction B, wherein plant holders 1 are only mounted to a single side of said rib 7, alternating a plant holder 1 with a plant holder receiving space 5. The plant tray assembly may for example include two grid structure end elements 6, in between which at least one grid structure element 3 is located, or as for example in the Figures 1 and 2, in between which three grid structure elements 3 are located. The plant holders 1 may be fixedly connected to a central rib 4 or a rib 7 of a grid structure element 3 or a grid structure end element 6 respectively. Alternatively, said grid structure element 3 and/or said grid structure end element 6 may be modular elements, to which a desired number of plant holders 1 is mountable. Modular grid structure elements may be extra advantageous in combination with plant holders 1 constituting a plant pot in itself, which may be detachably connected to, for example clipped onto, a central rib 4, or a rib 7 of a grid structure element 3 or a grid structure end element 6, so that a plant can remain in the same pot from the beginning until sale. The central rib 4, or the rib 7 of such a modular grid structure element 3 or grid structure end element 6 may also be modular in itself, comprising pieces which are for example connectable through sliding joints or any other known connection method.

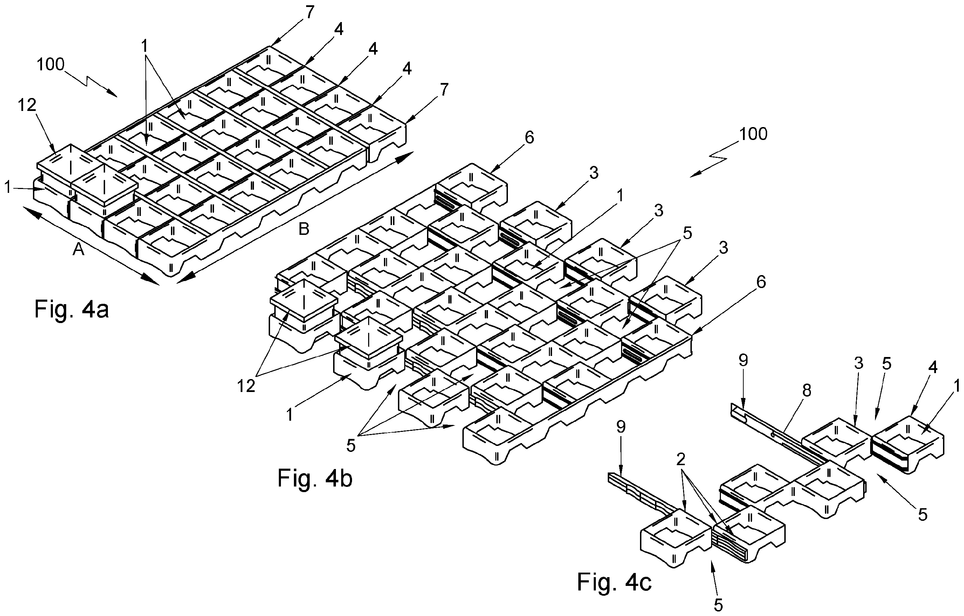

In a preferred embodiment of the invention, which is not shown in Figure 2, a plant tray assembly may be extended in such a way that a distance between diagonally adjacent plant holders remains unchanged between a retracted position and an extended position of said assembly, resulting in a doubling of the surface needed for the plant tray assembly in an extended position compared to its retracted position. It should be understood that diagonally adjacent plant holders are plant holders only touching at a corner of a plant holder in case the plant holders were square plant holders. When extending the assembly, a different plant holder will take the place of the diagonally adjacent plant holder, but the distance is measured between the same places of diagonally adjacent plant holders, not between the same plant holders. The extension in Figure 2 is an over-extension compared to the above-described preferred embodiment. Figures 4a and 4b show another embodiment the plant tray assembly 100 in retracted position and extended position respectively. The plant tray assembly 100 comprises a plurality of plant holders 1. In figures 4a and 4b, some of the plant holders 1 are provided with a plant pot 12. Similar to the embodiment explained in relation to figure 1 and figure 2, the plant tray assembly 100 can be extended in direction A to increase the distance between the individual plant holders 1, and thus between the plants in the plant pots 12. Here too, the distance between diagonally adjacent plant holders 1 remains unchanged between a retracted position and an extended position of the assembly 100. Figure 4c shows a grid structure element 8, similar to the one shown in figure 2 and that can be used in the tray assembly 100 of figures 4a and 4b.

In the exemplary embodiment of Figure 2, the extension system 8, movably connecting said plant holders 1 and arranged to move said assembly between a retracted position and an extended position, is a slidable extension system 8, comprising at least one telescopically extendable rod 9, bar or rail, for example four such rods 9, connecting at least two grid structure elements 3 or connecting a grid structure end element 6 to at least one grid structure element 3. In the case of Figure 2, a holding part 10 of said extension rod 9 is fixedly connected to two adjacent grid structure elements 3, in particular to a side wall 2 of a plant holder 1 of such a grid structure element 3, whereas a sliding part 11 of said extension rod 9 is fixedly connected to a grid structure end element 6, for example to a side wall 2 of a plant holder 1 of such a grid structure element 3. The size of the plant tray assembly, its weight and the desired degree of solidity and ease of use may determine the number of extendable rods 9 to be implemented into the extension system. The extension system can be operated manually, for example by pulling out a grid structure end element 6, or can also easily be automated, as will be clear to the person skilled in the art. The extension system 8 of the grid structure element 3 in figure 4c is a similar system using a telescopically extendible rod. However, many variants are possible. Instead of a telescopic system a pin in a slit system may be used, or a ratchet system may be used that may allow for easy extension to a predetermined distance in the retracted position. Alternatively, a pin in hole system may be used, or a pinion on a rack system may be used. The systems can be operated manually and/or automated, e.g. by electrical and/or hydraulic and/or pneumatic and/or mechanical actuation devices.

For the purpose of clarity and a concise description, features are described herein as part of the same or separate embodiments, however, it will be appreciated that the scope of this disclosure may include embodiments having combinations of all or some of the features described. It may be understood that the embodiments shown have the same or similar components, apart from where they are described as being different.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage. Many variants will be apparent to the person skilled in the art. The scope of the invention is defined by the appended claims.

## Claims

1. Extendable plant tray assembly comprising a plurality of plant holders (1) in a grid structure, wherein in a first direction (A) said plant holders (1) are movably connected through an extension system (8) arranged to move said assembly between a retracted position and an extended position, the assembly including at least one grid structure element (3) comprising a central rib (4) in a second direction (B) transverse to said first direction (A), wherein a plurality of plant holders (1) is mounted to said rib (4) in a staggered manner, alternating a plant holder (1) with a plant holder receiving space (5), including at least one grid structure end element (6), arranged to be located at an end position of said assembly in said first direction (A), comprising a rib (7) in said second direction (B), **characterized in that** in said grid structure end element (6) plant holders (1) are only mounted to a single side of said rib (7), alternating a plant holder (1) with a plant holder receiving space (5).

2. Extendable plant tray assembly according to claim 1, wherein a distance between diagonally adjacent plant holders (1) remains unchanged between said retracted position and said extended position of said assembly.

3. Extendable plant tray assembly according to any of the preceding claims, including two grid structure end elements (6), in between which at least one grid structure element (3) is located.

4. Extendable plant tray assembly according to any of the preceding claims, wherein said extension system (8) comprises a slidable extension system.

5. Extendable plant tray assembly according to claim 4, wherein said slidable extension system (8) comprises at least one telescopically extendable rod (9) connecting at least two grid structure elements (3) or connecting a grid structure end element (6) to at least one grid structure element (3).

6. Extendable plant tray assembly according to any of the preceding claims, wherein a size of said plant holder receiving space (5) corresponds to a size of an adjacent plant holder (1).

7. Extendable plant tray assembly according to any of the preceding claims, wherein said plant holder (1) includes a bottom surface.

8. Extendable plant tray assembly according to any of the preceding claims, wherein said plant holder (1) is a plant pot.

9. Extendable plant tray assembly according to any of the preceding claims, wherein said grid structure element (3) and/or said grid structure end element (6) are modular elements, to which a desired number of plant holders (1) is mountable.

10. Grid structure element (3) for an extendable plant tray assembly, for example according to any of the preceding claims, comprising a central rib (4), wherein a plurality of plant holders (1) is mounted to said rib (4) in a staggered manner, alternating a plant holder (1) with a plant holder receiving space (5).

11. Grid structure end element (6) for an extendable plant tray assembly, according to any of the preceding claims, comprising a rib (7), wherein plant holders (1) are only mounted to a single side of said rib (7), alternating a plant holder (1) with a plant holder receiving space (5).

## Patentansprüche

1. Ausziehbare Pflanzentablettanordnung, die mehrere Pflanzenhalter (1) in einer Gitterstruktur umfasst, wobei die Pflanzenhalter (1) in einer ersten Richtung (A) durch ein Ausziehsystem (8) beweglich verbunden sind, das so angeordnet ist, dass es die Anordnung zwischen einer eingezogenen Position und einer ausgezogenen Position bewegt, wobei die Anordnung wenigstens ein Gitterstrukturelement (3) einschließt, das eine zentrale Rippe (4) in einer zweiten Richtung (B) quer zur ersten Richtung (A) umfasst, wobei mehrere Pflanzenhalter (1) an der Rippe (4) in einer gestaffelten Weise montiert sind, wobei ein Pflanzenhalter (1) abwechselnd mit einem Pflanzenhalteraufnahmeraum (5) montiert ist, der wenigstens ein Gitterstruktur-Endelement (6) einschließt, das so angeordnet ist, dass es sich an einer Endposition der Anordnung in der ersten Richtung (A) befindet, die eine Rippe (7) in der zweiten Richtung (B) umfasst, **dadurch gekennzeichnet, dass** in dem Gitterstruktur-Endelement (6) Pflanzenhalter (1) nur an einer einzigen Seite der Rippe (7) montiert sind, wobei sich ein Pflanzenhalter (1) mit einem Pflanzenhalteraufnahmeraum (5) abwechselt.

2. Ausziehbare Pflanzentablettanordnung nach Anspruch 1, wobei ein Abstand zwischen diagonal benachbarten Pflanzenhaltern (1) zwischen der eingezogenen Position und der ausgezogenen Position der Anordnung unverändert bleibt.

3. Ausziehbare Pflanzentablettanordnung nach einem der vorhergehenden Ansprüche, mit zwei Gitterstruktur-Endelementen (6), zwischen denen sich wenigstens ein Gitterstrukturelement (3) befindet.

4. Ausziehbare Pflanzentablettanordnung nach einem der vorhergehenden Ansprüche, wobei das Ausziehsystem (8) ein verschiebbares Ausziehsystem umfasst.

5. Ausziehbare Pflanzentablettanordnung nach Anspruch 4, wobei das verschiebbare Ausziehsystem (8) wenigstens eine teleskopisch ausziehbare Stange (9) umfasst, die wenigstens zwei Gitterstrukturelemente (3) verbindet oder ein Gitterstruktur-Endelement (6) mit wenigstens einem Gitterstrukturelement (3) verbindet.

6. Ausziehbare Pflanzentablettanordnung nach einem der vorhergehenden Ansprüche, wobei eine Größe des Pflanzenhalteraufnahmeraums (5) einer Größe eines benachbarten Pflanzenhalters (1) entspricht.

7. Ausziehbare Pflanzentablettanordnung nach einem der vorhergehenden Ansprüche, wobei der Pflanzenhalter (1) eine Bodenfläche aufweist.

8. Ausziehbare Pflanzentablettanordnung nach einem der vorhergehenden Ansprüche, wobei der Pflanzenhalter (1) ein Pflanzentopf ist.

9. Ausziehbare Pflanzentablettanordnung nach einem der vorhergehenden Ansprüche, wobei das Gitterstrukturelement (3) und/oder das Gitterstruktur-Endelement (6) modulare Elemente sind, an denen eine gewünschte Anzahl von Pflanzenhaltern (1) montierbar ist.

10. Gitterstrukturelement (3) für eine ausziehbare Pflanzentablettanordnung, beispielsweise nach einem der vorhergehenden Ansprüche, mit einer zentralen Rippe (4), wobei an der Rippe (4) mehrere Pflanzenhalter (1) in einer gestaffelten Weise montiert sind, wobei sich ein Pflanzenhalter (1) mit einem Pflanzenhalteraufnahmeraum (5) abwechselt.

11. Gitterstruktur-Endelement (6) für eine ausziehbare Pflanzentablettanordnung nach einem der vorhergehenden Ansprüche, umfassend eine Rippe (7), wobei Pflanzenhalter (1) nur an einer einzigen Seite der Rippe (7) montiert sind, wobei sich ein Pflanzenhalter (1) mit einem Pflanzenhalteraufnahmeraum (5) abwechselt.

## Revendications

1. Ensemble de plateau de plante extensible comprenant une pluralité de supports de plante (1) dans une structure de grille, dans lequel dans une première direction (A), lesdits supports de plante (1) sont reliés de manière mobile par l'intermédiaire d'un système d'extension (8) conçu pour déplacer ledit ensemble entre une position rétractée et une position étendue, l'ensemble comprenant au moins un élément de structure de grille (3) comprenant une nervure centrale (4) dans une seconde direction (B) transversale à ladite première direction (A), dans lequel une pluralité de supports de plante (1) sont montés sur ladite nervure (4) d'une manière décalée, en alternant un support de plante (1) avec un espace de réception de support de plante (5), comprenant au moins un élément d'extrémité de structure de grille (6), conçu pour être situé à une position d'extrémité dudit ensemble dans ladite première direction (A), comprenant une nervure (7) dans ladite seconde direction (B), **caractérisé en ce que**, dans ledit élément d'extrémité de structure de grille (6), les supports de plante (1) sont montés uniquement sur un seul côté de ladite nervure (7), en alternant un support de plante (1) avec un espace de réception de support de plante (5).

2. Ensemble de plateau de plante extensible selon la revendication 1, dans lequel une distance entre des supports de plante adjacents en diagonale (1) reste inchangée entre ladite position rétractée et ladite position étendue dudit ensemble.

3. Ensemble de plateau de plante extensible selon l'une quelconque des revendications précédentes, comprenant deux éléments d'extrémité de structure de grille (6), entre lesquels au moins un élément de structure de grille (3) est situé.

4. Ensemble de plateau de plante extensible selon l'une quelconque des revendications précédentes, dans lequel ledit système d'extension (8) comprend un système d'extension coulissant.

5. Ensemble de plateau de plante extensible selon la revendication 4, dans lequel ledit système d'extension coulissant (8) comprend au moins une tige extensible de manière télescopique (9) reliant au moins deux éléments de structure de grille (3) ou reliant un élément d'extrémité de structure de grille (6) à au moins un élément de structure de grille (3).

6. Ensemble de plateau de plante extensible selon l'une quelconque des revendications précédentes, dans lequel une taille dudit espace de réception de support de plante (5) correspond à une taille d'un support de plante adjacent (1).

7. Ensemble de plateau de plante extensible selon l'une quelconque des revendications précédentes, dans lequel ledit support de plante (1) inclut une surface inférieure.

8. Ensemble de plateau de plante extensible selon l'une quelconque des revendications précédentes, dans lequel ledit support de plante (1) est un pot pour plante.

9. Ensemble de plateau de plante extensible selon l'une quelconque des revendications précédentes, dans lequel ledit élément de structure de grille (3) et/ou ledit élément d'extrémité de structure de grille (6) sont des éléments modulaires, sur lesquels un nombre souhaité de supports de plante (1) peut être monté.

10. Elément de structure de grille (3) pour un ensemble de plateau de plante extensible, par exemple selon l'une quelconque des revendications précédentes, comprenant une nervure centrale (4), dans lequel une pluralité de supports de plante (1) sont montés sur ladite nervure (4) d'une manière étagée, en alternant un support de plante (1) avec un espace de réception de support de plante (5).

11. Elément d'extrémité de structure de grille (6) pour un ensemble de plateau de plante extensible selon l'une quelconque des revendications précédentes, comprenant une nervure (7), dans lequel des supports de plante (1) sont montés uniquement sur un seul côté de ladite nervure (7), en alternant un support de plante (1) avec un espace de réception de support de plante (5).
